# FASCICULE DE BREVET EUROPEEN

(11) **EP 0 821 997 B1**
(45) Date de publication et mention de la délivrance du brevet: **26.11.2003**
(21) Numéro de dépôt: 97420126.1
(22) Date de dépôt: 24.07.1997
(51) Int. Cl.: B01D 65/08, B01D 65/00

(54) **Installation pour fragmenter des éléments hétérogènes d'un milieu fluide destiné à circuler à l'intétieur d'un module de filtration**
Vorrichtung zum Zerkleinern von verschiedenenartigen Bestandteilen eines fluiden Mediums, das in einem Filtrationsmodul strömen wird
Device for comminuting heterogeneous components of a fluid medium that will circulate in a filtration module

(30) Priorité: 29.07.1996 FR 9609765
(43) Date de publication de la demande: 04.02.1998
(73) Titulaire: T.A.M.I. INDUSTRIES, F-26110 Nyons (FR)
(72) Inventeur: Grangeon, André, 84600 Valreas (FR); Lescoche, Philippe, 84110 Faucon (FR)
(74) Mandataire: Thibault, Jean-Marc

(56) Documents cités:
- EP-A- 0 343 531
- EP-A- 0 387 377
- WO-A-91/05600
- US-A- 4 213 856

## Description

La présente invention concerne le domaine technique de l'échange de matières ou de la séparation moléculaire ou particulaire. Dans le domaine préféré ci-dessus, l'objet de l'invention trouve une application particulièrement avantageuse dans le domaine de la nanofiltration, l'ultrafiltration, la microfiltration, la filtration ou l'osmose inverse.

Dans le domaine de l'échange de matières, une installation comporte, d'une manière générale, un module de filtration relié en entrée à un circuit d'alimentation d'un milieu fluide et, en sortie, à un circuit de sortie du milieu fluide. Le module de filtration comporte généralement une série de canaux ménagés dans un support rigide et à l'intérieur desquels le milieu fluide circule.

Généralement, un ou plusieurs canaux sont ménagés à l'intérieur d'éléments de filtration de forme tubulaire. Chaque élément de filtration est constitué d'un support poreux à l'intérieur duquel est ménagé un ou plusieurs canaux dont la surface interne est pourvue d'au moins une couche séparatrice dont la nature et la morphologie sont adaptées pour assurer la séparation des molécules ou des particules contenues dans le milieu liquide circulant à l'intérieur des canaux. Un tel élément de filtration réalise, par effet tamis, une séparation des espèces moléculaires ou particulaires de produits à traiter, dans la mesure où toutes les molécules ou particules supérieures au diamètre des pores de la couche séparatrice sont arrêtées. L'élément de filtration répartit ainsi le volume entrant en un premier volume appelé filtrat ou perméat et contenant les molécules ou particules ayant traversé l'élément de filtration et en un second volume, contenant les molécules ou particules retenues par l'élément de filtration. Il est ainsi connu de constituer un appareil échangeur formant un module de filtration comportant une série d'éléments tubulaires de filtration placés côte à côte à l'intérieur d'un carter. Il peut ainsi être constitué un module contenant 252 éléments tubulaires de filtration de diamètre externe de 10 mm ou 37 éléments tubulaires de 25 mm de diamètre externe.

Il apparaît, toutefois, que le milieu fluide à traiter comporte des éléments hétérogènes tels que des bulles ou des agglomérats de matière. De tels éléments hétérogènes, dont la taille est variable, sont susceptibles de provoquer le bouchage des canaux de circulation, dans la mesure où le canal n'est plus accessible au fluide. Il s'ensuit une réduction de la surface d'échange ou de filtration. Par ailleurs, il a été constaté que de tels éléments hétérogènes étaient susceptibles d'entraîner la destruction du support dans lequel sont aménagés les canaux de circulation du fluide. En effet, les modules sont destinés à subir une opération de nettoyage par l'intermédiaire de réactifs chimiques venant attaquer les matières déposées à l'intérieur des canaux, de manière à les détacher du support poreux. Or, la présence d'un élément hétérogène d'une masse relativement importante ne peut pas être détruite par les réactifs chimiques. Au contraire, les éléments hétérogènes subissent une réaction de dégradation entraînant une variation volumique des éléments hétérogènes qui sont alors susceptibles d'exercer sur les parois des canaux une pression telle que le support se trouve brisé.

Il a été noté également que les éléments hétérogènes, tels que les bulles, sont susceptibles d'entraîner une destruction des supports. En effet, des bulles d'air apparaissent dans le milieu à traiter en raison d'un mauvais remplissage de l'installation ou à des cavitations des pompes de circulation ou un dégazage du fluide. Si des bulles restent dans l'installation, leur pression interne peut augmenter au fur et à mesure de leur passage à l'intérieur du module d'échange. Cette accumulation d'énergie à l'intérieur des bulles va engendrer à un moment donné, leur détente sous la forme d'un coup de bélier. L'onde développée par ce coup de bélier peut alors provoquer la destruction des supports d'échange.

Dans le domaine technique des échangeurs de chaleur, il est connu d'installer en amont de l'entrée des tubes échangeurs, un dispositif formé d'une plaque percée de trous dont le diamètre est inférieur à la section de passage des tubes échangeurs.

Toutefois, la mise en oeuvre d'une telle plaque sur un module de filtration ne donnerait pas satisfaction en pratique. En effet, l'interposition d'une telle plaque sur le trajet de circulation du fluide entraîne l'apparition d'une diminution des performances du module en raison de la perte de charge créée. De plus, il doit être considéré que les trous de cette plaque sont susceptibles d'être bouchés relativement fréquemment par des éléments hétérogènes venant se déposer sur la plaque. Il s'ensuit une perte des performances et la nécessité de procéder à des opérations de maintenance relativement fréquentes.

L'objet de l'invention vise à donc à remédier aux inconvénients énoncés ci-dessus en proposant un dispositif permettant d'éviter que des éléments hétérogènes d'un milieu fluide destiné à circuler à l'intérieur d'un appareil de filtration viennent à réduire la surface d'échange ou à détruire les éléments de filtration.

Un autre objet de l'invention est de proposer un dispositif adapté pour éviter le bouchage des canaux de circulation du fluide, tout en présentant une faible perte de charge pour le passage de fluide et une faculté à ne pas être obturé par les éléments hétérogènes du milieu fluide.

L'objet de l'invention vise donc à proposer une installation équipée d'un dispositif permettant de fragmenter les éléments hétérogènes d'un milieu fluide avant leur circulation à l'intérieur d'un module de filtration.

Conformément à l'invention, l'installation comporte :
- un module de filtration relié, en entrée, à un circuit d'alimentation d'un milieu fluide comportant des éléments hétérogènes et, en sortie, à un circuit de sortie du milieu fluide, le module de filtration comportant une série de canaux à l'intérieur desquels le milieu fluide est destiné à circuler,
- et un dispositif plan disposé en amont de l'entrée des canaux et présentant des passages.

Selon l'invention, le dispositif constitue une grille :
- présentant des passages dont une dimension est égale à la plus petite dimension de la section de passage des canaux divisée par n, avec n compris entre 1,4 et 10,
- et formée d'éléments séparateurs coupants définissant les passages et dont l'épaisseur minimale est comprise entre 0,1 et 2 mm, pour assurer la fragmentation des éléments hétérogènes du milieu fluide.

Diverses autres caractéristiques ressortent de la description faite ci-dessous en référence aux dessins annexés qui montrent, à titre d'exemples non limitatifs, des formes de réalisation et de mise en oeuvre de l'objet de l'invention.

La **fig. 1** est une vue schématique partielle d'un appareil échangeur comportant un dispositif de fragmentation conforme à l'invention.

La **fig. 2** est une vue à plus grande échelle montrant l'objet de l'invention.

La **fig. 3** est une vue en coupe transversale montrée sensiblement selon les lignes III-III de la **fig. 2**.

Il doit être considéré que l'objet de l'invention est destiné à être mis en oeuvre dans une installation **1** d'échange de matière, au sens général. La description qui suit sera effectuée pour une installation assurant un échange de matière, à savoir la séparation ou la filtration de molécules ou de particules contenues dans un milieu fluide, de préférence, liquide de nature diverse comportant une phase solide ou non.

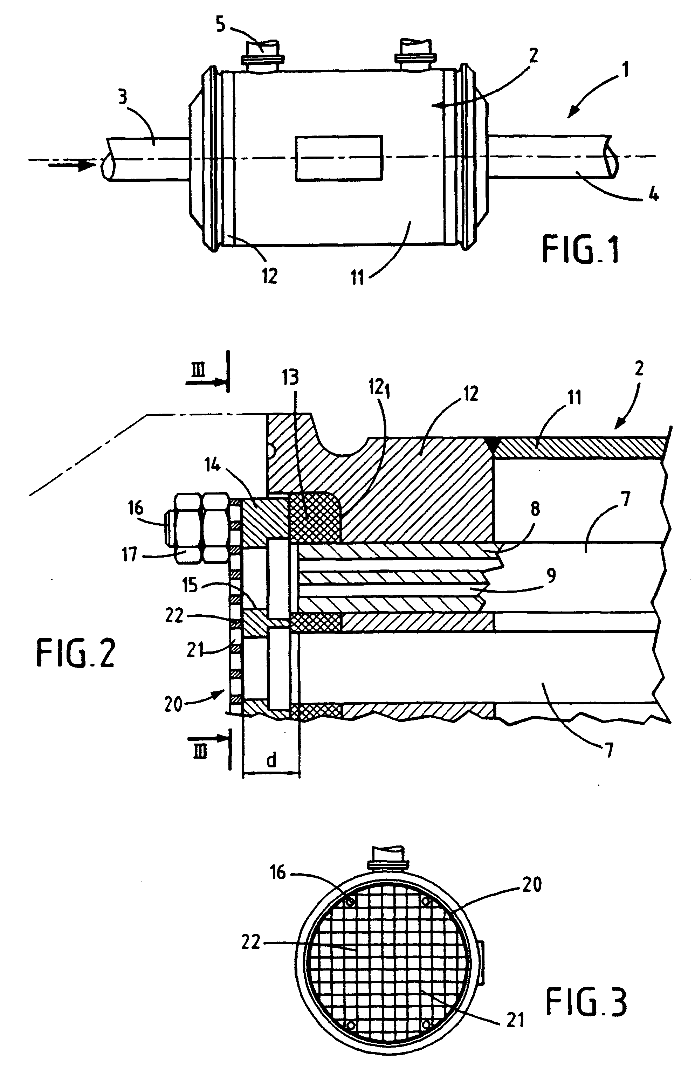

Dans l'exemple illustré à la **fig. 1**, l'installation de filtration **1** comporte un appareil de séparation **2** formant, dans l'exemple illustré, un module de filtration alimenté en milieu fluide à traiter par un circuit d'alimentation **3** et raccordé en sortie, à un circuit de retour **4**. Le module de séparation **2** comporte, de manière classique, un circuit **5** de récupération de la partie du milieu fluide ayant subi la séparation, à savoir le perméat ou le filtrat.

Tel que cela apparaît plus précisément a la **fig. 2**, le module **2** comporte au moins un et, dans l'exemple illustré, une série d'éléments de filtration **7** de forme tubulaire. Chaque élément de filtration **7** comporte un support poreux rigide **8** réalisé de préférence mais non exclusivement, en matière inorganique dont la résistance au transfert est adaptée à la séparation à effectuer. Dans l'exemple préféré, le support **8** est réalisé à partir de matériaux inorganiques tels que des oxydes métalliques, du carbone ou des métaux. Le support **8** possède une forme extérieure cylindrique de section droite transversale hexagonale ou, comme illustré, circulaire. Chaque élément de filtration **7** comporte au moins un et, de préférence, plusieurs canaux **9** réalisés parallèlement à l'axe longitudinal du support. Les canaux **9** présentent chacun une surface recouverte par au moins une couche séparatrice non représentée destinée à être en contact avec le milieu fluide à traiter circulant à l'intérieur des canaux **9**. La nature de la ou des couches séparatrices est choisie en fonction du pouvoir de séparation ou de filtration à obtenir et forme avec le support **8** une liaison intime de façon que la pression provenant du milieu liquide soit transmise au support poreux. Chaque canal **9** présente une section droite pouvant présenter des formes diverses, telles que circulaires ou pseudo-circulaires.

Les éléments de filtration **7** sont placés à l'intérieur d'un carter **11** de forme cylindrique dont chaque extrémité est pourvue d'une plaque **12** de positionnement des éléments de filtration **7**. Tel que cela apparaît plus précisément à la **fig. 2**, les éléments **7** s'étendent à l'intérieur du carter **11** en faisant saillie par leur extrémité, à partir de la face transversale **12**_{**1**} des plaques **12** fixées sur les extrémités du carter **11**. De manière classique, la face transversale **12**_{**1**} des plaques d'extrémité **12** est destinée à recevoir un joint **13** conformé pour entourer les extrémités des tubes **7**. Le joint **13** est destiné à être comprimé par l'intermédiaire d'une plaque de serrage **14** permettant d'assurer une étanchéité des tubes **7** par rapport à l'intérieur du carter **11**. La plaque de serrage **14** est percée d'une série de trous **15** réalisés chacun en regard ou en vis-à-vis avec un élément de filtration **7**. Chaque plaque de serrage **14** est montée sur la plaque d'extrémité **12** par l'intermédiaire de goujons **16** s'étendant à partir de la plaque d'extrémité et fixée à l'aide d'écrous **17**.

Conformément à l'invention, l'installation **1** est destinée à être équipée d'un dispositif **20** conforme à l'invention assurant une fragmentation des éléments hétérogènes du milieu fluide à traiter. Par éléments hétérogènes, il doit être compris des agglomérats ou des particules de matière correspondant à des interactions entre les espèces présentes dans le milieu fluide ou à des arrachements de dépôt sur les parois des circuits de l'installation. Il doit être aussi considéré que des bulles font partie des éléments hétérogènes.

Le dispositif de fragmentation **20** conforme à l'invention est constitué par une grille s'étendant sensiblement dans un plan et munie de passages **21** présentant chacun au moins une dimension inférieure à la plus petite dimension de la section de passage des canaux **9**, en vue d'assurer le passage d'éléments hétérogènes dont les dimensions sont plus faibles que celles des canaux **9**. Aussi, chaque passage **21** présente une dimension égale à la plus petite dimension de la section de passage des canaux, divisée par un nombre n, où n est compris entre 1,4 et 10 et, de préférence, entre 2 et 4. Ainsi, les passages **21** sont définis par au moins une de leur dimension qui est inférieure à la plus petite dimension de la section de passage des canaux **9**. Il doit être considéré qu'une dimension correspond à une mesure permettant de définir la géométrie des canaux **9** ou des passages **21**. Ainsi, une dimension correspond :
- pour un cercle, au diamètre,
- pour un carré, à un côté,
- pour un rectangle, à la largeur ou à la longueur,
- pour un triangle, à la hauteur ou à la base,
- pour un polygone régulier à n côtés, le diamètre du cercle circonscrivant les côtés.

Il apparaît ainsi que les passages **21** sont aménagés de manière que leur nombre soit au moins égal au nombre de canaux **9**.

De plus, la grille **20** comporte des éléments séparateurs **22** permettant de délimiter les passages **21**. Les éléments séparateurs **22** présentent chacun une épaisseur comprise entre 0,1 et 2 mm et, de préférence, comprise entre 0,3 et 0,5 mm. Le choix de la section des éléments séparateurs **22** associée au dimensionnement des passages **21,** permet d'obtenir une fragmentation des éléments hétérogènes en éléments non susceptibles d'obstruer les canaux **9**. La faible valeur pour la section ou l'épaisseur des éléments séparateurs permet de disposer d'une grille possédant, d'une part, un pouvoir coupant important et, d'autre part, une faible perte de charge pour le passage du milieu fluide. Les éléments séparateurs **22** sont donc coupants en raison de leur épaisseur relativement faible.

Dans une première forme de réalisation, la grille **20** peut être réalisée à partir de fils, par exemple métalliques, montés de manière entrecroisée. Selon cette variante de réalisation, les éléments séparateurs **22** présentent une forme filaire et sont constitués par les fils qui présentent une épaisseur sensiblement constante ou uniforme. Selon une autre forme de réalisation de l'invention, la grille **20** peut être formée à partir d'une plaque percée de trous formant chacun un passage **21** et isolés les uns par rapport aux autres par les éléments séparateurs **22** constitués par la matière restante de la plaque. La section des passages **21** peut présenter diverses formes, par exemple, circulaire ou en forme de parallélogramme. Ainsi, la matièrequi subsiste définit les éléments séparateurs coupants dont l'épaisseur dépend de la forme des passages **21.** Pour posséder cet effet coupant, les éléments séparateurs présentent une épaisseur comprise entre 0,1 et 2 mm et, de préférence, entre 0,3 et 0,5 mm. L'épaisseur des éléments séparateurs est soit sensiblement constante ou uniforme pour constituer des éléments de séparation filaire, soit évolutive et plus importante par rapport à son épaisseur minimale.

Selon une caractéristique avantageuse de l'invention, la grille de fragmentation **20** est montée à une distance d de l'entrée de l'appareil échangeur comprise entre **0** et 300 mm et, de préférence, entre 0 et 10 mm. L'entrée du module échangeur **2** est prise à partir du plan passant par les faces transversales des éléments de filtration **7**.

Selon une autre caractéristique de l'invention, chaque grille **20** est montée sur la plaque de serrage **14** du côté externe du module et du côté du circuit d'alimentation **3**. La grille **20** possède des dimensions extérieures sensiblement identiques à celles de la plaque de serrage **14**, comme cela apparaît clairement à la **fig. 3.** Cette grille **20** est montée sur les goujons **16** en étant fixée par l'intermédiaire des écrous **17**. Selon une autre variante de réalisation, il est à noter que la grille **20** peut constituer la plaque de serrage **14.**

L'invention n'est pas limitée aux exemples décrits et représentés, car diverses modifications peuvent y être apportées sans sortir de son cadre.

## Revendications

1. Installation comportant :
- un module de filtration (**2**) relié, en entrée, à un circuit (**3**) d'alimentation d'un milieu fluide comportant des éléments hétérogènes et, en sortie, à un circuit de sortie du milieu fluide, le module de filtration (**2**) comportant une série de canaux (**9**) à l'intérieur desquels le milieu fluide est destiné à circuler,
- et un dispositif plan (**20**) disposé en amont de l'entrée des canaux (**9**) et présentant des passages (**21**),
**caractérisée en ce que** le dispositif (**20**) constitue une grille :
- présentant des passages (**21**) dont une dimension de la section est égale à la plus petite dimension de la section de passage des canaux (**9**) divisée par n, avec n compris entre 1,4 et 10, le nombre des passages (**21**) étant au moins égal au nombre des canaux (9)
- et formée d'éléments séparateurs coupants (**22**) définissant les passages (**21**) et dont l'épaisseur est comprise entre 0,1 et 2 mm, pour assurer la fragmentation des éléments hétérogènes du milieu fluide.

2. Installation selon la revendication 1, **caractérisée en ce que** la grille (**20**) est composée d'éléments séparateurs coupants (**22**) dont l'épaisseur est comprise entre 0,3 et 0,5 mm.

3. Installation selon la revendication 1 ou 2, **caractérisée en ce que** la grille (**20**) est composée d'éléments séparateurs coupants (**22**) définissant les passages (**21**) dont une dimension de la section est égale à la plus petite dimension de la section de passage des canaux (**9**) divisée par n, avec n compris entre 2 et 4.

4. Installation selon l'une des revendications 1 à 3, **caractérisée en ce que** la grille (**20**) est placée par rapport à l'entrée des canaux (**9**), à une distance (**d**) comprise entre 0 et 300 mm et, de préférence, entre 0 et 10 mm.

5. Installation selon l'une des revendications 1 à 4, **caractérisée en ce que** la grille (**20**) est formée d'une plaque percée de trous définissant les passages (**21**) et laissant subsister les éléments séparateurs coupants (**22**).

6. Installation selon l'une des revendications 1 à 5, **caractérisée en ce que** les éléments séparateurs coupants (**22**) possèdent une épaisseur sensiblement constante.

7. Installation selon l'une des revendications 1 à 4, **caractérisée en ce que** la grille (**20**) est formée de fils entrecroisés définissant les éléments séparateurs coupants (**22**).

8. Installation selon l'une des revendications 1 à 4, **caractérisée en ce que** la grille (**20**) est fixée sur une plaque de serrage (**14**) exerçant une pression sur un joint d'étanchéité (**13**) monté sur une plaque d'extrémité (**12**) du module assurant le montage de tubes de filtration (**7**).

9. Installation selon la revendication 8, **caractérisée en ce que** la grille (**20**) constitue la plaque de serrage **(14)**.

10. Installation selon la revendication 8, **caractérisée en ce que** la grille (**20**) présente des dimensions extérieures sensiblement identiques de celles de la plaque de serrage (**14**).

11. Installation selon l'une des revendications 8 à 10, **caractérisée en ce que** la plaque de serrage (**14**) est munie d'une série de trous (**15**) réalisés chacun en vis-à-vis avec un élément de filtration (**7**) dans lequel est aménagé au moins un canal de circulation du milieu fluide.

## Patentansprüche

1. Vorrichtung mit:
- einem Filtrationsmodul (2), das eingangs mit einem Kreislauf (3) zur Zuleitung eines heterogene Elemente umfassenden fluiden Mediums und ausgangs mit einem Kreislauf zur Ableitung des fluiden Mediums verbunden ist, wobei das Filtrationsmodul (2) eine Reihe Kanäle (9) umfasst, in denen das fluide Medium zirkuiieren soll,
- und einer flachen Vorrichtung (20), die vor dem Eingang der Kanäle (9) angeordnet ist und Durchlässe (21) aufweist,
**dadurch gekennzeichnet, dass** die Vorrichtung (20) ein Gitter bildet:
- das Durchlässe (21) aufweist, deren eine Querschnittsabmessung der kleinsten Abmessung des Durchlassquerschnitts der Kanäle (9) dividiert durch n entspricht, mit n zwischen 1,4 und 10, wobei die Anzahl der Durchlässe (21) wenigstens der Anzahl der Kanäle (9) entspricht,
- und das aus schneidenden Trennelementen (22) gebildet ist, die die Durchlässe (21) bilden und deren Dicke zwischen 0,1 und 2 mm liegt, um die Trennung der heterogenen Elemente des fluiden Mediums zu gewährleisten.

2. Vorrichtung nach Anspruch 1,
**dadurch gekennzeichnet, dass** sich das Gitter (20) aus schneidenden Trennelementen (22) zusammensetzt, deren Dicke zwischen 0,3 und 0,5 mm liegt.

3. Vorrichtung nach Anspruch 1 oder 2,
**dadurch gekennzeichnet, dass** sich das Gitter (20) aus schneidenden Trennelementen (22) zusammensetzt, die die Durchlässe (21) bilden, deren eine Querschnittsabmessung der kleinsten Abmessung des Durchlassquerschnitts der Kanäle (9) dividiert durch n entspricht, wobei n zwischen 2 und 4 liegt.

4. Vorrichtung nach einem der Ansprüche 1 bis 3,
**dadurch gekennzeichnet, dass** das Gitter (20) bezüglich dem Eingang der Kanäle (9) mit einem Abstand angeordnet ist, der zwischen 0 und 300 mm und vorzugsweise zwischen 0 und 10 mm liegt.

5. Vorrichtung nach einem der Ansprüche 1 bis 4,
**dadurch gekennzeichnet, dass** das Gitter (20) von einer mit Löchern durchbohrten Platte gebildet ist, die die Durchlässe (21) bilden und die schneidenden Trennelemente (22) bestehen lassen.

6. Vorrichtung nach einem der Ansprüche 1 bis 5,
**dadurch gekennzeichnet, dass** die schneidenden Trennelemente (22) eine im Wesentlichen konstante Dicke besitzen.

7. Vorrichtung nach einem der Ansprüche 1 bis 4,
**dadurch gekennzeichnet, dass** das Gitter (20) aus miteinander verflochtenen Drähten gebildet ist, die die schneidenden Trennelemente (22) bilden.

8. Vorrichtung nach einem der Ansprüche 1 bis 4,
**dadurch gekennzeichnet, dass** das Gitter (20) auf einer Aufspannplatte (14) befestigt ist, die Druck auf eine Dichtung (13) ausübt, die auf einer Endplatte (12) des Moduls angebracht ist, die die Montage der Filtrationsrohre (7) gewährleistet.

9. Vorrichtung nach Anspruch 8,
**dadurch gekennzeichnet, dass** das Gitter (20) die Aufspannplatte (14) bildet.

10. Vorrichtung nach Anspruch 8,
**dadurch gekennzeichnet, dass** das Gitter (20) Außenmaße aufweist, die im Wesentlichen denen der Aufspannplatte (14) entsprechen.

11. Vorrichtung nach einem der Ansprüche 8 bis 10,
**dadurch gekennzeichnet, dass** die Aufspannplatte (14) mit einer Reihe Löchern (15) versehen ist, die jeweils einem Filtrationselement (7) gegenüberliegend ausgeführt sind, in dem wenigstens ein Kanal zur Zirkulation des fluiden Mediums ausgebildet ist.

## Claims

1. An appliance comprising:
- a filter module (2) with an inlet connected to a supply line (3) for a fluid medium comprising heterogeneous elements and with an outlet connected to a fluid medium outlet line, the filter module (2) comprising a series of channels (9) inside which the fluid medium is to be circulated; and
- a planar means (20) located upstream of the inlet to the channels (9) and comprising passages (21 );
**characterised in that** the means (20) constitutes a screen:
- comprising passages (21), one cross section dimension of which is equal to the smallest dimension of the cross section of flow of the channels (9) divided by n, where n is in the range 1.4 to 10, with the number of the passages (21) being at least equal to the number of the channels (9); and
- formed from cutting separator elements (22) defining the passages (21) and having a thickness which is in the range 0.1 mm to 2 mm, to ensure fragmentation of heterogeneous elements of the fluid medium.

2. An appliance according to claim 1, **characterised in that** the screen (20) is composed of cutting separator elements (22), the thickness of which is in the range 0.3 mm to 0.5 mm.

3. An appliance according to claim 1 or claim 2, **characterised in that** the screen (20) is composed of cutting separator elements (22) defining passages (21), one cross section dimension of which is equal to the smallest dimension of the cross section of flow of the channels (9) divided by n, where n is in the range 2 to 4.

4. An appliance according to one of claims 1 to 3, **characterised in that** the screen (20) is placed at a distance (d) which is in the range 0 to 300 mm, preferably in the range 0 to 10 mm, from the inlet to the channels (9).

5. An appliance according to one of claims 1 to 4, **characterised in that** the screen (20) is formed from a plate pierced with holes defining the passages (21) and leaving cutting separator elements (22).

6. An appliance according to one of claims 1 to 5, **characterised in that** the cutting separator elements (22) have a substantially constant thickness.

7. An appliance according to one of claims 1 to 4, **characterised in that** the screen (20) is formed from crisscrossed wires defining the cutting separator elements (22).

8. An appliance according to one of claims 1 to 4, **characterised in that** the screen (20) is fixed to a clamping plate (14) which exercises pressure on a seal (13) mounted on one end plate (12) of the module to mount the filter tubes (7).

9. An appliance according to claim 8, **characterised in that** the screen (20) constitutes the clamping plate (14).

10. An appliance according to claim 8, **characterised in that** the screen (20) has external dimensions which are substantially identical to those of the clamping plate (14).

11. An appliance according to one of claims 8 to 10, **characterised in that** the clamping plate (14) is provided with a series of holes (15) each formed opposite a filter element (7) in which at least one fluid medium circulation channel is arranged.
